Europäisches Patentamt

European Patent Office

Office européen des brevets

(19)

(11) Numéro de publication: **0 124 457**
**A 1**

# (12) DEMANDE DE BREVET EUROPEEN

(21) Numéro de dépôt: **84420080.8**

(22) Date de dépôt: **02.05.84**

(51) Int. Cl.³: **F 16 G 13/16,** F 16 L 3/00,
H 02 G 11/06

(30) Priorité: **03.05.83 FR 8307554**

(43) Date de publication de la demande: **07.11.84**
**Bulletin 84/45**

(84) Etats contractants désignés: **AT BE CH DE FR GB IT LI**
**NL SE**

(71) Demandeur: **Distributions - Etudes - Réalisations**
**Industrielles Lyonnaises - DECRIL Société à**
**Responsabilité Limitée, Chemin des Vosges Fontaines**
**Saint Martin, F-69250 Fontaines sur Saone (FR)**

(72) Inventeur: **Micheau, Philippe Chemin des Vosges,**
**Fontaines Saint Martin, F-69250 Fontaines sur Saone**
**(FR)**

(74) Mandataire: **Monnier, Guy et al, Cabinet**
**Monnier 142-150 Cours Lafayette B.P. 3058,**
**F-69393 Lyon Cédex 03 (FR)**

(54) Support articulé pour les conducteurs d'alimentation des organes mobiles des machines-outils et ensembles analogues.

(57) La limitation du déplacement angulaire relatif des maillons est opérée à l'aide des pivots (3) qui assemblent lesdits maillons. A cet effet, chaque pivot (3) comprend une partie cylindrique (30) solidaire de deux paires d'ailettes (32, 33) opposées, qui coopèrent avec des lumières (12) prévues dans les joues emboîtables (10, 11) des flasques (1) des maillons. La retenue des pivots (3) est assurée par des étriers débordants (4) qui s'encliquettent entre les deux paires d'ailettes.

EP 0 124 457 A1

1

Support articulé pour les conducteurs d'alimentation des organes mobiles des machines-outils et ensembles analogues -

La présente invention a trait aux dispositifs connus sous le terme générique de "chaînes porte-câbles" et destinés à supporter les conducteurs flexibles (câbles électriques, canalisations pneumatiques ou hydrauliques) assurant l'alimentation, la commande et le contrôle des organes mobiles des machines-outils, manipulateurs, robots et ensembles analogues.

Ces organes mobiles étant animés de mouvements alternatifs suivant un schéma relativement complexe, les supports articulés du type visé doivent se déplacer suivant un trajet bien déterminé, propre à éviter que les conducteurs qu'ils supportent soient soumis à des flexions exagérées ou risquent de venir au contact des organes mobiles précités au cours du fonctionnement de l'ensemble. Aussi les maillons qui constituent ces supports ne disposent que d'un déplacement angulaire limité, variable suivant les applications envisagées et apte à impartir ainsi à l'ensemble du support envisagé sa mobilité suivant le trajet imposé.

Dans la technique connue (voir en particulier le brevet français 2.052.270), ce résultat est atteint en faisant comporter aux maillons articulés des butées disposées de manière à venir en contact les unes avec les autres et à limiter ainsi l'angle de pivotement de deux maillons adjacents. Il convient d'observer qu'un tel agencement nécessite le recours à des maillons différents en fonction de l'angle maximal de pivotement désiré pour le support, ce qui complique évidemment la fabrication et le stockage.

C'est à cet inconvénient qu'entend principalement remédier l'invention, laquelle consiste essentiellement à limiter le déplacement angulaire relatif des maillons du support articulé à l'aide des pivots d'assemblage eux-mêmes, pourvus à cet effet de facettes qui coopèrent avec jeu avec les bords de lumières pratiquées dans les flasques des maillons au niveau des perforations destinées à recevoir lesdits pivots.

On comprend dans ces conditions que les maillons, avantageusement réalisés en matière plastique moulée, peuvent présenter une conformation identique quel que soit l'angle de pivotement maximal désiré, la seule modification à envisager portant sur les pivots susceptibles d'être aisément montés et démontés en vue de leur remplacement. Ces pivots peuvent être réalisés en métal moulé afin de mieux supporter les efforts.

Le dessin annexé, donné à titre d'exemple, permetrra de mieux comprendre l'invention, les caractéristiques qu'elle présente et les avantages qu'elle est susceptible de procurer :

Fig. 1 est une vue en perspective de l'un des maillons d'un support articulé suivant l'invention, représenté avec les deux pivots qui en liaison avec des étriers de verrouillage assurent l'assemblage dudit maillon avec celui immédiatement adjacent.

Fig. 2 est une coupe horizontale montrant l'assemblage mutuel de trois maillons consécutifs d'un tel support.

Fig. 3 à 7 sont des vues de côté illustrant schématiquement la limitation du pivotement de deux maillons à l'aide des pivots d'assemblage.

Fig. 8 et 9 montrent deux variantes de réalisation des maillons, respectivement des pivots.

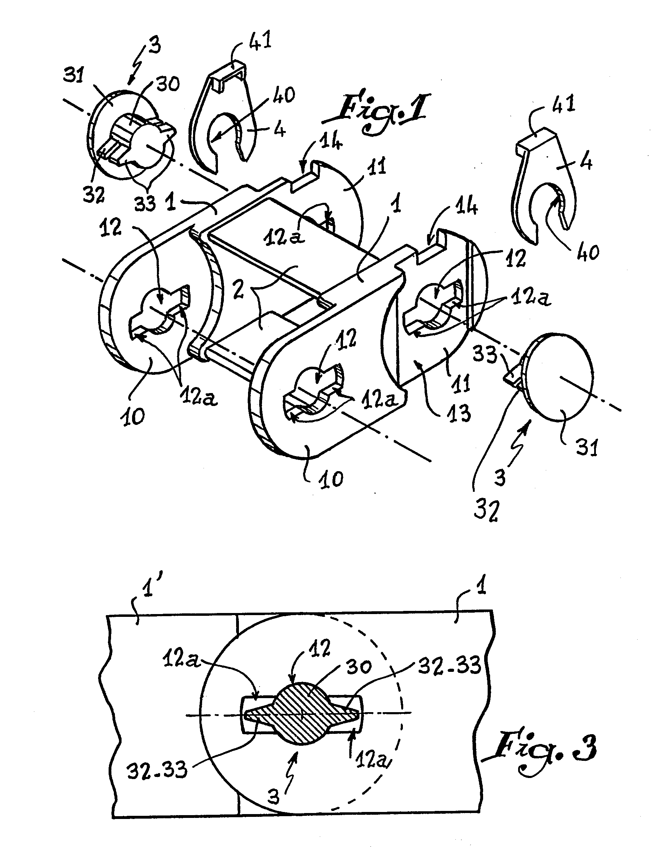

En fig. 1 on a représenté un maillon entièrement réalisé en matière plastique moulée et constitué par deux flasques latéraux 1 reliés l'un à l'autre par deux traverses superposées 2. Les extrémités des flasques 1 sont établies à demi-épaisseur, la disposition étant inversée à l'une et l'autre des extrémités afin de définir pour chaque maillon deux joues extérieures 10 et deux joues intérieures 11. La partie centrale de chacune de ces joues 10 ou 11 est occupée par une lumière 12 dont le profil présente une partie centrale circulaire interrompue par deux prolongements opposés orientés

3

suivant l'axe longitudinal des flasques 1.

L'assemblage articulé des maillons du support est opéré à l'aide de pivots 3 comprenant une partie cylindrique 30 dont le diamètre extérieur correspond, à un très léger jeu près, au diamètre intérieur de la partie centrale des lumières 12 ; cette partie cylindrique 30, terminée à l'une de ses extrémités par un disque de butée 31, est solidaire de deux paires d'ailettes 32 et 33 décalées axialement l'une par rapport à l'autre, les ailettes 32 ou 33 d'une même paire étant orientées à l'opposé l'une de l'autre. A chaque pivot 3 est associé un étrier de verrouillage 4 découpé d'une ouverture 40 propre, moyennant déformation élastique momentanée de ses branches, à venir chevaucher par encliquetage la partie cylindrique 30 d'un pivot entre les deux paires d'ailettes 32 et 33 ; à l'opposé de sa partie ouverte chaque étrier 4 est pourvu d'un rebord de préhension 41.

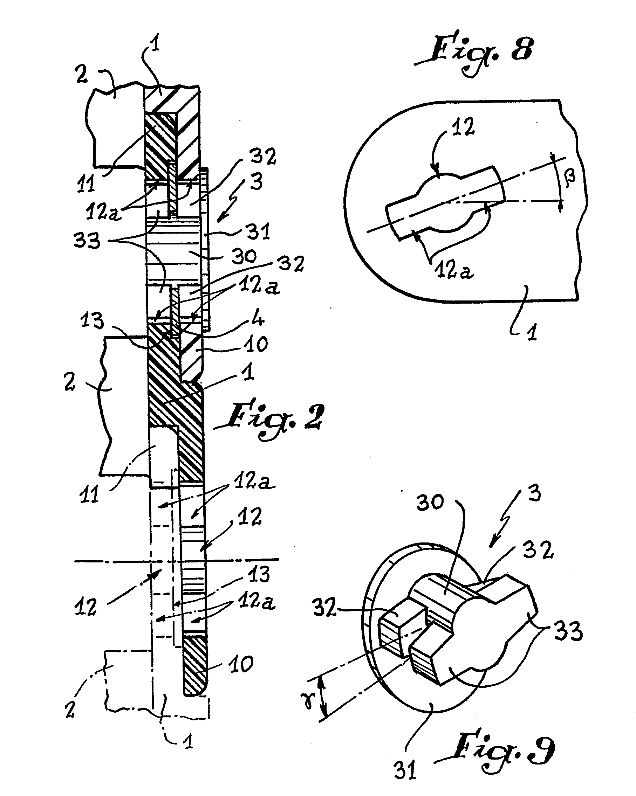

Comme illustré en fig. 2, les joues intérieures 11 d'un maillon 1-2 sont aptes à venir s'emboîter entre les joues extérieures 10 du maillon adjacent et pour l'assemblage articulé de ces deux maillons il suffit d'introduire deux pivots 3 dans les lumières 12 et de mettre en place sur chacun d'eux un étrier 4 ; celui-ci vient se loger à l'intérieur d'une dépression 13 (fig. 1) pratiquée dans la face extérieure de chaque joue intérieure 11, tandis que son rebord 41 trouve place dans une entaille 14. Les deux maillons 1 envisagés sont alors verrouillés l'un à l'autre tout en pouvant pivoter.

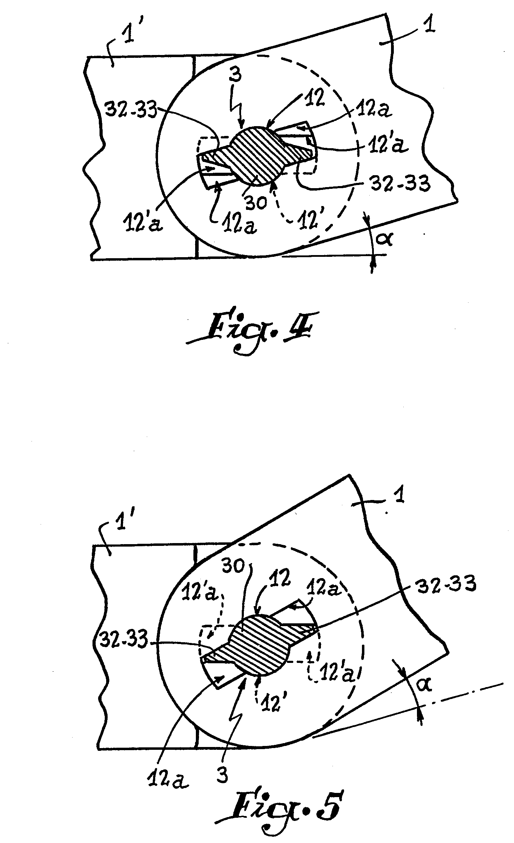

On comprend cependant que l'angle de pivotement maximal est limité par les ailettes 32 et 33 à l'intérieur des lumières 12. Dans l'exemple envisagé on a supposé que chacune de ces ailettes présentait un profil triangulaire et pour exposer le fonctionnement on partira de fig. 3 où deux maillons (flasques 1 et 1') ont été représentés en position horizontale alignée, les ailettes des deux paires 32 et 33 étant elles-mêmes orientées suivant l'axe longitudinal défini par lesdits maillons.

4

Si à partir de la position de fig. 3 on fait pivoter le flasque 1 vers le haut par rapport au flasque 1' maintenu angulairement fixe, dans une première phase le pivot 3 va rester lui-même immobile jusqu'à ce que ses ailettes 32 viennent porter contre les bords des prolongements latéraux (référencés 12a) de la lumière envisagée 12 du flasque 1, comme illustré en fig. 4 où l'on a indiqué en $\alpha$ le déplacement angulaire correspondant dudit flasque 1. Par suite de la portée ci-dessus mentionnée, la poursuite du déplacement angulaire du flasque 1 vers le haut va entraîner la rotation du pivot 30 jusqu'à ce que les ailettes 33 de celui-ci viennent buter contre les bords des prolongements 12'a de la lumière 12' du flasque 1', comme représenté en fig. 5 où l'on peut voir que le flasque 1 s'est déplacé d'un nouvel angle $\alpha$ à partir de la position précédente. Le déplacement angulaire total du flasque 1 vers le haut est donc égal à 2 $\alpha$.

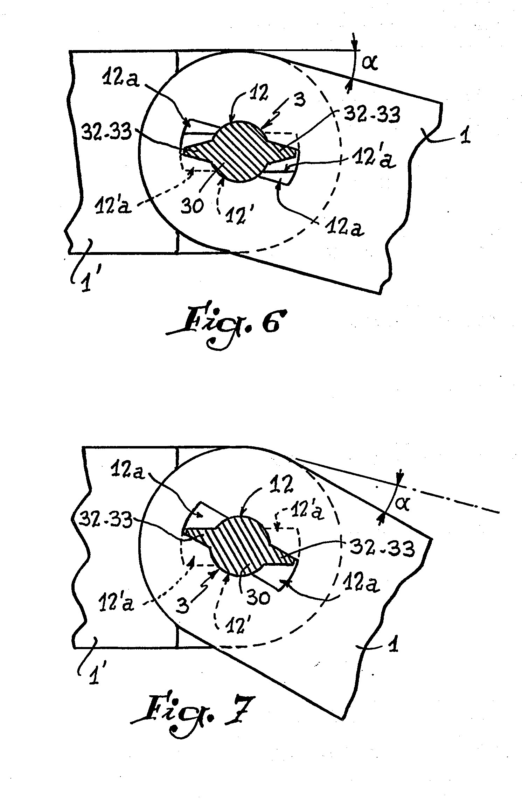

Bien évidemment la situation est identique si à partir de fig. 3 on fait basculer le flasque 1 vers le bas par rapport au flasque 1' maintenu fixe, en ce sens que ce flasque 1 va se déplacer angulairement d'un premier angle $\alpha$ (fig. 6) sans que le pivot 3 tourne, puis d'un second angle $\alpha$ moyennant rotation dudit pivot (fig. 7). On obtient ici encore un déplacement angulaire maximal de 2 $\alpha$ vers le bas.

On conçoit que la valeur de l'angle $\alpha$ dépend bien entendu du profil particulier des ailettes 32 et 33 des pivots 3, de telle sorte que si l'utilisateur dispose de plusieurs types de pivots pourvus d'ailettes de conformations différentes, il peut, moyennant une substitution appropriée, modifier le comportement du support articulé sans avoir à remplacer les maillons du support.

Dans les explications qui précèdent on a supposé, pour mieux faire comprendre l'invention, que le déplacement angulaire égal à 4 $\alpha$ s'effectuait de part et d'autre de la position alignée des deux maillons adjacents de fig. 3. Cette disposition ne correspond toutefois pas à la réalité car en fait le

5

support doit toujours être bloqué à la position sus-mentionnée, le pivotement des maillons ne pouvant s'effectuer que dans un seul sens à partir de ladite position. Aussi en pratique on prévoit (fig. 8) sur l'une des paires de joues 10 ou 11, des lumières 12 orientées suivant un axe qui définit un angle $\beta$ avec l'axe d'alignement des deux maillons, auquel cas ceux-ci ne pourront se déplacer angulairement que suivant une seule direction par rapport à l'horizontale, ce déplacement étant égal à 4 $\alpha$ .

De la même manière le profil triangulaire des ailettes 32 et 33 n'est pas indispensable et l'on peut envisager des pivots 3 pourvus d'ailettes à profil trapézoïdal propres à occuper une surface importante de la section des lumières 12, comme illustré en fig. 9 où les deux paires d'ailettes sont décalées l'une par rapport à l'autre d'un angle $\gamma$ .

Les ailettes latérales opposées 31 et 32 ne constituent au surplus qu'une forme de réalisation préférée et l'on peut très bien imaginer des pivots 3 présentant en section transversale un profil circulaire incomplet propre à définir des facettes de butée, aptes à coopérer avec des parties correspondantes des lumières pratiquées dans les joues des maillons.

6

Revendications

1. Support articulé pour les conducteurs destinés à assurer l'alimentation des organes mobiles des machines-outils et ensembles analogues, du genre constitué par une chaîne dont les maillons ne peuvent se déplacer que d'un angle limité les uns par rapport aux autres, la valeur de cet angle variant de cas en cas, caractérisé en ce que la limitation du déplacement angulaire des maillons (1-2) est opérée par les pivots (3) qui assurent l'assemblage articulé desdits maillons, lesquels pivots présentent à cet effet des facettes (32, 33) qui sont engagées avec jeu à l'intérieur de lumières profilées (12) prévues dans les joues emboîtables (10, 11) des maillons pour le passage desdits pivots.

2. Support suivant la revendication 1, caractérisé en ce que chaque pivot (3) est solidaire de deux paires d'ailettes diamétralement opposées l'une à l'autre dans chaque paire, ces deux paires étant décalées axialement l'une par rapport à l'autre le long de la partie cylindrique (30) du pivot pour permettre le passage d'un étrier de verrouillage (4) qui s'oppose à tout retrait intempestif du pivot envisagé.

1/4

00124457

Fig.1

Fig.3

*Fig. 8*

*Fig. 2*

*Fig. 9*

*Fig. 4*

*Fig. 5*

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 782 670 (KIELMA) <br> * Colonne 3, ligne 8 - colonne 4, ligne 61; figures 1-9 * | 1 | F 16 G 13/16 <br> F 16 L 3/00 <br> H 02 G 11/06 |
| | --- | | |
| A | DE-A-1 932 428 (KABELSCHLEPP) <br><br> & FRA 2052270 (cat. D) | | |
| | --- | | |
| A | DE-A-2 415 374 (HENNIG) | | |
| | --- | | |
| A | DE-A-3 025 838 (McGRAW-EDISON) | | |
| | --- | | |
| A | EP-A-0 001 656 (MAURI) | | DOMAINES TECHNIQUES RECHERCHES (Int. Cl. ³) |
| | --- | | |
| A | US-A-3 772 875 (VIANO) | | |
| | --- | | F 16 G <br> H 02 G <br> F 16 L |
| A | US-A-3 503 578 (AERO-MOTIVE) | | |
| | --- | | |
| A | EP-A-0 021 153 (MAURI) | | |
| | ----- | | |

| Le présent rapport de recherche a été établi pour toutes les revendications | | |
|---|---|---|
| Lieu de la recherche <br> LA HAYE | Date d'achèvement de la recherche <br> 10-08-1984 | Examinateur <br> BARON C. |